(19) Europäisches Patentamt
European Patent Office
Office européen des brevets

(11) Veröffentlichungsnummer : **0 075 182**
**B1**

(12) # EUROPÄISCHE PATENTSCHRIFT

(45) Veröffentlichungstag der Patentschrift : **11.12.85**

(51) Int. Cl.[4] : **C 09 B 67/14**, C 09 B 67/16

(21) Anmeldenummer : **82108235.1**

(22) Anmeldetag : **08.09.82**

(54) **Verfahren zur Konditionierung eines organischen Pigments.**

(30) Priorität : **21.09.81 US 304127**

(43) Veröffentlichungstag der Anmeldung : **30.03.83 Patentblatt 83/13**

(45) Bekanntmachung des Hinweises auf die Patenterteilung : **11.12.85 Patentblatt 85/50**

(84) Benannte Vertragsstaaten : **CH DE GB LI**

(56) Entgegenhaltungen :
**BE-A- 450 361**
**CH-A- 312 143**
**DE-B- 1 275 028**
**FR-A- 2 072 512**
**FR-A- 2 154 787**
**US-A- 3 265 699**

(73) Patentinhaber : **Mobay Chemical Corporation**
**Penn Lincoln Parkway West**
**Pittsburgh, Pennsylvania 15205 (US)**

(72) Erfinder : **Santimauro, John Francis**
**731 Birchwood Drive**
**Wyckoff New Jersey 07381 (US)**

(74) Vertreter : **Jochum, Axel et al**
**c/o BAYER AG Zentralbereich Patente, Marken und Lizenzen**
**D-5090 Leverkusen 1, Bayerwerk (DE)**

**EP 0 075 182 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Konditionierung eines organischen Pigments durch Behandlung mit Polyphosphorsäure.

Es ist bekannt, Diarylterephthalsäuren mit Polyphosphorsäure zum Chinacridonring zu schließen und 2,9-Difluorchinacridone und Perylenhydrazinpigmente mit Polyphosphorsäure zu konditionieren (siehe z. B. DE-OS 23 05 266, US-PS 28 21 530, DE-OS 21 48 866, DE-OS 20 58 577 und BE-PS 720207). Die US-A-3 265 699 behandelt eine Verbesserung des bekannten Verfahrens der Säureverpastung von Pigmenten, die dadurch erreicht wird, daß

a) die saure Lösung durch einen niedrigen Alkohol, der

b) ausweislich der Beispiele dem Verpastungsgemisch zugegeben wird, verdünnt wird.

Es wird weiterhin klar herausgestellt, daß die Art der Verdünnung (Menge des Verdünnungsmittels, Geschwindigkeit der Zugabe) keineswegs beliebig ist, sondern vielmehr das Ergebnis der Konditionierung bestimmt. Gemäß der Lehre der US-A-3 265 399 wird während des Verdünnens ein « Säureüberschuß » gefordert. Gemäß Spalte 2, Zeilen 51/52 der US-A wird unter Polyphosphorsäure ein Produkt verstanden, das 82-84 % $P_2O_5$-Äquivalent enthält ; mit diesen Angaben errechnet sich für das in Beispiel XVI resultierende Verdünnungsgemisch ein $H_3PO_4$-Äquivalent von $> 40$ %. Gemäß sämtlichen Konditionierungsbeispielen der US-A-3 265 399 wird eine ein- bis mehrstündige thermische Nachbehandlung des säureverpasteten Pigments im Verdünnungsmittel erforderlich. Das neue Verfahren betrifft die Konditionierung eines Pigments der Anthanthron-, Pyranthron-, Iso-violanthron-, Flavanthron-, Indanthron-, Naphthaldazin-, Indigo-, Thioindigo-, Naphthalintetracarbonsäure-, Dioxazin-, Isoindolinon-, Perylentetracarbonsäure- und -bisimid-, Anthrapyrimidin-, Acylamino- anthrachinon-, Dianthrachinonyl-, Azoanthrachinon-, Azomethinanthrachinon- und Phthalocyaninreihe und ist dadurch gekennzeichnet, daß man ein Rohpigment mit Polyphosphorsäure behandelt, und man das Gemisch in eine solche Menge an Wasser, Eis oder einer mit Wasser mischbaren organischen Flüssigkeit oder in ein Gemisch dieser Substanzen einfließen läßt, daß das $H_3PO_4$-Äquivalent der resultierenden Mischung $\leqslant 40$ % beträgt.

Insbesondere eignet sich das neue Verfahren zur Konditionierung eines Rohpigments aus der Perylentetracarbonsäurebismid-, Dioxazin-, Flavanthron- oder Indanthronreihe oder eines rohen gegebenenfalls chlorierten und/oder bromierten Kupferphthalocyanin-Pigments.

Erfindungsgemäß können z. B. konditioniert werden :

Pigment Red 123 (Colour Index Constitution No. 71145) ;

Pigment Red 149 (C.I. 71137) ;

Pigment Red 179 (C.I. 71130) ;

Pigment Violet 23 (C.I. 51319) ;

Pigment Yellow 112 (C.I. 70600) ;

Pigment Blue 60 (C.I. 69800) ;

Pigment Blue 15, α-Modifikation (C.I. 74160) ;

Pigment Blue 15, β-Modifikation (C.I. 74160) ;

Kupferphthalocyanin mit einem Chlorgehalt von etwa 3 bis etwa 14 %, vorzugsweise etwa 3 bis etwa 6 % ;

Pigment Green 7 (C.I. 74260).

Die Konditionierung der Rohpigmente erfolgt nach ihrer Herstellung nach bekannten Verfahren.

Die erfindungsgemäß zur Konditionierung eingesetzten Polyphosphorsäuren sind bekannte viskose flüssige Zusammensetzungen, die im wesentlichen aus Gemischen von Sauerstoffsäuren des 5-wertigen Phosphors bestehen. Die Hauptkomponenten sind Kondensationspolymere der ortho-Phosphorsäure, insbesondere lineare Polymere, die sich durch die folgende Strukturformel kennzeichnen lassen

$$H\left(-O\overset{\overset{O}{\|}}{\underset{\underset{OH}{|}}{P}}-\right)_n OH$$

in der n eine Zahl $\geqslant 2$ ist.

Jeder der Säurebestandteile kann als eine chemische Verbindung von Wasser und $P_2O_5$ in einem charakteristischen stöchiometrischen Verhältnis angesehen werden. Demgemäß kann man die Zusammensetzung der Polyphosphorsäuren mit Hilfe der Gewichtsprozente $P_2O_5$, die der Mischung äquivalent sind, basierend auf den gesamten Phosphorgehalt der Mischung, der durch Analyse bestimmt wird ($P_2O_5$-Äquivalent) definieren. Man kann sich auch auf die Gewichtsprozente an $H_3PO_4$, die der Polyphosphorsäure äquivalent sind ($H_3PO_4$-Äquivalent) beziehen. Im folgenden wird der Ausdruck $H_3PO_4$-Äquivalent verwendet.

Die eingesetzte Polyphosphorsäure sollte vorzugsweise ein $H_3PO_4$-Äquivalent von wenigstens 100 % haben ; besonders vorteilhaft sollte die Stärke der Polyphosphorsäure etwa 105 bis etwa 125 % $H_3PO_4$-Äquivalent betragen. In einer weiteren vorzugsweisen Ausgestaltung der vorliegenden Erfindung werden handelsübliche Polyphosphorsäure, die $H_3PO_4$-Äquivalente von 113 % bis 118 % haben, als Konditionierungsmittel eingesetzt.

Die Menge der eingesetzten Polyphosphorsäure beträgt vorzugsweise etwa 2 bis 20 Gewichtsteile pro Gewichtsteil Pigment, berechnet auf 100 %iges Pigment, insbesondere bevorzugt 3-8 Gewichtsteile pro Gewichtsteil 100 %iges Pigment. Die Polyphosphorsäureverpastung wird im allgemeinen bei Temperaturen von 20-200 °C, vorzugsweise bei 40-150 °C durchgeführt. Die Zeit für die Säureverpastung beträgt vorzugsweise 1 bis 20 Stunden.

Die Säureverpastung kann durch Lösen oder Aufschlämmen des Rohpigments in Polyphosphorsäure erfolgen.

Nach der Säurebehandlung wird der Ansatz gegebenenfalls auf 100 °C abgekühlt und in eine solche Menge an Wasser, Eis oder einer mit Wasser mischbaren organischen Flüssigkeit oder in ein Gemisch dieser Substanzen einfließen gelassen, daß das $H_3PO_4$-Äquivalent der resultierenden Mischungen $\leq$ 40 % ist. Im allgemeinen verwendet man 1 bis 20 Gewichtsteile, vorzugsweise 2 bis 5 Gewichtsteile, bezogen auf das Gewicht der Säure-Pigmentmischung an Wasser, Eis der mit Wasser mischbaren organischen Flüssigkeit oder dem Gemisch dieser Substanzen.

Beispiele für geeignete Wasser mischbare organische Flüssigkeiten sind Methanol, Ethanol, Isopropanol, Glycerin, Ethylenglykol, Diacetonalkohol und Aceton. Methanol wird vorzugsweise eingesetzt.

Das behandelte Pigment wird auf übliche Weise z. B. durch Filtration isoliert.

Näturlich kann die Qualität des konditionierten Pigments, wie es gemäß der vorliegenden Erfindung erhalten wird, weiter etwa durch Behandlung mit Wasser, organischen Flüssigkeiten oder Flüssigkeitsgemischen bei Raumtemperatur oder erhöhten Temperaturen mit oder ohne Zusatz von oberflächenaktiven Mitteln erhöht werden. Auch kann das Pigment geharzt werden.

Das gemäß der vorliegenden Erfindung konditionierte Pigment hat überraschenderweise einen verbesserten Vollton und größere Farbstärke, verglichen mit Produkten, die nach herkömmlichen Methoden konditioniert wurden.

Verglichen mit der Säureverpastung mit Schwefelsäure bietet das erfindungsgemäße Verfahren wichtige und überraschende Vorteile : Polyphosphorsäure kann bei höheren Temperaturen als Schwefelsäure und demzufolge in geringeren Mengen eingesetzt werden ; bei der Neutralisation erfordert die Phosphorsäure weniger Alkali als Schwefelsäure (bei einer Neutralisation bis pH 5-6) ; Phosphorsäure kann aus der Mutterlauge wiedergewonnen werden und zur weiteren Verwendung aufkonzentriert werden.

Die Erfindung wird durch die folgenden Beispiele veranschaulicht. Es versteht sich von selbst, daß die Erfindung nicht auf die Einzelheiten der Beispiele beschränkt ist. Bei den angegebenen Teilen handelt es sich um Gewichtsteile.

## Beispiel 1

1 Teil rohes Pigment Red 149 wird bei 90-100 °C zu 7 Teilen Polyphosphorsäure (117 % $H_3PO_4$-Äquivalent) gegeben. Die Mischung wird bei 105-110 °C 15 bis 20 Stunden gerührt ; danach läßt man den Ansatz bei 20-30 °C in Wasser einfließen und rührt 2 Stunden lang. Das Pigment wird durch Filtration isoliert.

## Beispiel 2

1 Teil rohes Pigment Red 179 wird bei 80-95 °C zu 10 Teilen Polyphosphorsäure (117,1 % $H_3PO_4$-Äquivalent) gegeben. Man rührt 15 Stunden bei 104-106 °C. Die Reaktionsschmelze wird in 30 Teile Wasser bei 20-30 °C gegeben ; Man rührt 2 Stunden. Das Pigment wird durch Filtration isoliert.

## Beispiel 3

1 Teil rohes Pigment Green 7 wird bei 80-90 °C zu 7 Teilen Polyphosphorsäure (117,1 % $H_3PO_4$) gegeben. Innerhalb 16 Stunden erhöht man die Temperatur auf 195 °C und rührt die Mischung dann noch zusätzliche 2 Stunden bevor man zu 30 Teilen Wasser bei 20-30 °C gibt. Die wäßrige Mischung wird 2 Stunden gerührt. Danach wird das Pigment durch Filtrieren isoliert.

## Beispiel 4

1 Teil rohes Pigment Blue 15α- oder β-Modifikation wird bei 90-100 °C zu 5 Teilen Polyphosphorsäure (117,1 % $H_3PO_4$-Äquivalent) gegeben und das Gemisch etwa 15 Stunden bei 105-108 °C gerührt. Der Ansatz wird zu 20 Teilen Wasser bei 20-30 °C gegeben und die entstehende Mischung 2 Stunden gerührt. Das blaue Pigment wird durch Filtration isoliert.

## Beispiel 5

Beispiel 4 wird wiederholt, nur, daß anstelle von Pigment Blue 15 Kupferphthalocyaninblau mit einem Chlorgehalt von etwa 3-6 % eingesetzt wird.

Beispiel 6

1 Teil rohes Pigment Red 123 wird bei 80-95 °C zu 5 Teilen Polyphosphorsäure (116 % $H_3PO_4$-Äquivalent) gegeben. Der Ansatz wird 15 Stunden bei 95-110 °C gerührt. Danach wird die Temperatur auf 100-105 °C eingestellt und man rührt eine weitere Stunde bei dieser Temperatur. Der Ansatz wird zu 18 Teilen Wasser bei 20-30 °C gegeben und die wäßrige Aufschlämmung 2 Stunden gerührt. Das Pigment wird durch Filtration isoliert.

Beispiel 7

1 Teil rohes Pigment Violet 23 wird bei 90-100 °C zu 5 Teilen Polyphosphorsäure (110 % $H_3PO_4$-Äquivalent) gegeben. Die Schmelze wird etwa 15 Stunden bei 100-105 °C gerührt und dann zu 10 Teilen Wasser bei 20-30 °C gegeben ; die wäßrige Aufschlämmung wird 2 Stunden lang gerührt. Das violette Pigment wird durch Filtration isoliert.

Beispiel 8

1 Teil rohes Pigment Yellow 112 wird bei 70-80 °C zu 7 Teilen Polyphosphorsäure (117,1 % $H_3PO_4$-Äquivalent) gegeben. Das Gemisch wird auf 105 °C erhitzt und bei einer Temperatur von 103-107 °C 15 Stunden lang gehalten. Danach gibt man den Reaktionsansatz zu 33 Teilen Wasser bei 20-30 °C und rührt 2 Stunden bei 20-30 °C. Das gelbe Pigment wird durch Filtration isoliert.

Beispiel 9

1 Teil rohes Pigment Blue 60 wird bei 70-80 °C zu 7 Teilen Polyphosphorsäure (117,1 % $H_3PO_4$-Äquivalent) gegeben. Der Ansatz wird auf 100 °C gerührt. Die saure Schmelze wird dann zu 33 Teilen Wasser bei 10-20 °C gegeben. Das Gemisch wird 2 Stunden bei 10-20 °C gerührt und danach das blaue Pigment durch Filtration isoliert.

Beispiel 10

1 Teil rohes Pigment Violet 23 wird bei 90-100 °C zu 6 Teilen Polyphosphorsäure (115,9 % $H_3PO_4$-Äquivalent) gegeben. Der Ansatz wird 6 Stunden bei 100 °C gerührt und dann zu 2,5 Teilen Methanol gegeben. Das Gemisch wird 1 Stunde zum Rückfluß gekocht, zu 4 Teilen Wasser gegeben, 1/2 Stunde bei 60 °C gerührt und das violette Pigment durch Filtration isoliert.

**Patentansprüche**

1. Verfahren zur Konditionierung eines Pigments der Anthanthron-, Pyranthron-, Isoviolanthron-, Flavanthron-, Indanthron-, Naphthaldazin-, Indigo-, Thioindigo-, Naphthalintetracarbonsäure-, Dioxazin-, Isoindolinon-, Perylentetracarbonsäure- und -bis-imid-, Anthapyrimidin-, Acylaminoanthrachinon-, Dianthrachinonyl-, Azoanthrachinon-, Azomethin-anthrachinon- und Phthalocyanin-Reihe, dadurch gekennzeichnet, daß man ein Rohpigment mit Polyphosphorsäure behandelt, und man das Gemisch in eine solche Menge an Wasser, Eis oder einer mit Wasser mischbaren organischen Flüssigkeit oder in ein Gemisch dieser Substanzen einfließen läßt, das das $H_3PO_4$-Äquivalent der resultierenden Mischung $\leqslant$ 40 % beträgt.

2. Verfahren gemäß Anspruch 1, dadurch gekennzeichnet, daß das Rohpigment der Perylentetracarbonsäurebisimid-, Dioxazin-, Flavanthron- oder Indanthron-Reihe angehört oder ein gegebenenfalls chloriertes und/oder bromiertes Kupferphthalocyanin ist.

3. Verfahren gemäß Anspruch 1, dadurch gekennzeichnet, daß man Pigment Red 149, Pigment Red 179, Pigment Yellow 112, Pigment Blue 60, Pigment Blue 15 oder Kupferphthalocyanin-Blau mit einem Chlorgehalt von etwa 3 bis etwa 14 % als Rohpigmente einsetzt.

4. Verfahren gemäß Anspruch 1, dadurch gekennzeichnet, daß man Pigment Violet 23 als Rohpigment einsetzt.

5. Verfahren gemäß Anspruch 1, dadurch gekennzeichnet, daß man Pigment Red 123 als Rohpigment einsetzt.

6. Verfahren gemäß Anspruch 1, dadurch gekennzeichnet, daß man Kupferphthalocyanin-Blau mit einem Chlorgehalt von etwa 3 bis etwa 6 % als Rohpigment einsetzt.

7. Verfahren gemäß den Ansprüchen 1-6, dadurch gekennzeichnet, daß man Polyphosphorsäure mit einem Säuregehalt von etwa 105 bis etwa 125 % $H_3PO_4$-Äquivalent verwendet.

8. Verfahren gemäß den Ansprüchen 1-7, dadurch gekennzeichnet, daß man etwa 2 bis etwa 20 Gewichtsteile, vorzugsweise 3-8 Gewichtsteile Polyphosphorsäure pro Gewichtsteil Pigment, berechnet auf 100 %iges Pigment, einsetzt.

9. Verfahren gemäß den Ansprüchen 1-8, dadurch gekennzeichnet, daß man das Gemisch in Wasser einfließen läßt.

10. Verfahren gemäß den Ansprüchen 1-8, dadurch gekennzeichnet, daß man das Gemisch in Methanol einfließen läßt.

## Claims

1. Process for conditioning a pigment of the anthanthrone, pyranthrone, isoviolanthrone, flavanthrone, indanthrone, naphthaldazine, indigo, thioindigo, naphthalenetetracarboxylic acid, dioxazine, isoindolinone, perylenetetracarboxylic acid and bisimide, anthrapyrimidine, acylaminoanthraquinone, dianthraquinonyl, azoanthraquinone, azomethine anthraquinone and phthalocyanine series, characterised in that a crude pigment is treated with polyphosphoric acid and the mixture is allowed to flow into such an amount of water, ice or a water-miscible organic liquid or a mixture of these substances that the $H_3PO_4$ equivalent of the resulting mixture is $\leqslant 40$ %.

2. Process according to Claim 1, characterised in that the crude pigment belongs to the perylenetetracarboxylic acid bisimide, dioxazine, flavanthrone or indanthrone series or is an optionally chlorinated and/or brominated copper phthalocyanine.

3. Process according to Claim 1, characterised in that Pigment Red 149, Pigment Red 179, Pigment Yellow 112, Pigment Blue 60, Pigment Blue 15 or Copper Phthalocyanine Blue with a chlorine content of about 3 to about 14 % are used as the crude pigments.

4. Process according to Claim 1, characterised in that Pigment Violet 23 is used as the crude pigment.

5. Process according to Claim 1, characterised in that Pigment Red 123 is used as the crude pigment.

6. Process according to Claim 1, characterised in that Copper Phthalocyanine Blue with a chlorine content of about 3 to about 6 % is used as the crude pigment.

7. Process according to Claims 1-6, characterised in that polyphosphoric acid with an acid content equivalent to about 105 to about 125 % $H_3PO_4$ is used.

8. Process according to Claims 1-7, characterised in that about 2 to about 20 parts by weight, preferably 3-8 parts by weight of polyphosphoric acid are used per part by weight of pigment, based on 100 % pigment.

9. Process according to Claims 1-8, characterised in that the mixture is allowed to flow into water.

10. Process according to Claims 1-8, characterised in that the mixture is allowed to flow into methanol.

## Revendications

1. Procédé pour le conditionnement d'un pigment des séries de l'anthanthrone, de la pyranthrone, de l'isoviolanthrone, de la flavanthrone, de l'indanthrone, de la naphtaldazine, de l'indigo, du thioindigo, de l'acide naphtalènetétracarboxylique, de la dioxazine, de l'isoindolinone, de l'acide et du bis-imide pérylènetétracarboxyliques, de l'anthrapyrimidine, des acylaminoanthraquinones, de dianthraquinonyle, des azoanthraquinones, de l'azométhine-anthraquinone et des phtalocyanines, caractérisé en ce que l'on traite un pigment brut par l'acide polyphosphorique et on coule le mélange dans l'eau, la glace ou un liquide organique miscible à l'eau ou dans un mélange de ces substances, en quantité telle que l'équivalent d'$H_3PO_4$ du mélange obtenu soit inférieur ou égal à 40 %.

2. Procédé selon la revendication 1, caractérisé en ce que le pigment brut appartient à la série de l'acide ou du bis-imide pérylènetétracarboxylique, de la dioxazine, de la flavanthrone ou de l'indanthrone, ou consiste en une phtalocyanine de cuivre éventuellement chlorée et/ou bromée.

3. Procédé selon la revendication 1, caractérisé en ce que le pigment brut mis en œuvre est le Pigment Red 149, le Pigment Yellow 112, le Pigment Blue 60, le Pigment Blue 15 ou un bleu de phtalocyanine de cuivre à une teneur en chlore d'environ 3 à 14 %.

4. Procédé selon la revendication 1, caractérisé en ce que le pigment brut mis en œuvre est le Pigment Violet 23.

5. Procédé selon la revendication 1, caractérisé en ce que le pigment brut mis en œuvre est le Pigment Red 123.

6. Procédé selon la revendication 1, caractérisé en ce que le pigment brut mis en œuvre est un bleu de phtalocyanine de cuivre à une teneur en chlore d'environ 3 à 6 %.

7. Procédé selon les revendications 1 à 6, caractérisé en ce que l'on utilise de l'acide polyphosphorique à une teneur en acide correspondant à un équivalent d'$H_3PO_4$ d'environ 105 à 125 %.

8. Procédé selon les revendications 1 à 7, caractérisé en ce que l'on utilise d'environ 2 à 20 parties en poids, de préférence 3 à 8 parties en poids, d'acide polyphosphorique par partie en poids du pigment compté à 100 %.

9. Procédé selon les revendications 1 à 8, caractérisé en ce que l'on coule le mélange dans l'eau.

10. Procédé selon les revendications 1 à 8, caractérisé en ce que l'on coule le mélange dans le méthanol.